# FASCICULE DE BREVET EUROPEEN

(11) **EP 3 645 310 B1**
(45) Date de publication et mention de la délivrance du brevet: **12.05.2021**
(21) Numéro de dépôt: 18752801.3
(22) Date de dépôt: 27.06.2018
(51) Int. Cl.: B60C 1/00, C08L 7/00

(54) **PNEUMATIQUE POURVU D'UN FLANC EXTERNE DONT LA COMPOSITION COMPREND UN POLYOXYDE D'ETHYLENE**
LUFTREIFEN MIT EINEM EXTERNEN FLANSCH MIT EINER ZUSAMMENSETZUNG MIT EINEM POLYETHYLENOXID
PNEUMATIC TYRE PROVIDED WITH AN EXTERNAL FLANK WITH A COMPOSITION COMPRISING A POLYETHYLENE OXIDE

(30) Priorité: 29.06.2017 FR 1756032
(43) Date de publication de la demande: 06.05.2020
(73) Titulaire: Compagnie Générale des Etablissements Michelin, 63000 Clermont-Ferrand (FR)
(72) Inventeur: HELLOT, Fabien, 63040 Clermont-Ferrand Cedex 9 (FR); MAYER, Sylvain, 63040 Clermont-Ferrand Cedex 9 (FR); DULONG, Florian, 63040 Clermont-Ferrand Cedex 9 (FR)
(74) Mandataire: Bocchi, Brigitte
(86) Numéro de dépôt international: PCT/FR2018/051573
(87) Numéro de publication internationale: WO 2019/002765

(56) Documents cités:
- WO-A1-2014/105488
- US-A1- 2002 177 661
- DATABASE WPI Week 201501 Thomson Scientific, London, GB; AN 2014-W56825 XP002778362, & CN 104 059 255 A (YAN S) 24 septembre 2014 (2014-09-24)
- DATABASE WPI Week 201552 Thomson Scientific, London, GB; AN 2015-377278 XP002778363, -& JP 2015 120800 A (SUMITOMO RUBBER IND LTD) 2 juillet 2015 (2015-07-02)

## Description

La présente invention est relative aux bandages pneumatiques et plus particulièrement aux flancs externes de pneumatiques, c'est-à-dire, par définition, aux couches élastomériques situées radialement à l'extérieur du pneumatique, qui sont sont en contact avec l'air ambiant.

En effet, il est possible de définir au sein du pneumatique trois types de zones :
- La zone radialement extérieure et en contact avec l'air ambiant, cette zone étant essentiellement constituée de la bande de roulement et du flanc externe du pneumatique. Un flanc externe est une couche élastomérique disposée à l'extérieur de l'armature de carcasse par rapport à la cavité interne du pneumatique, entre le sommet et le bourrelet de sorte à couvrir totalement ou partiellement la zone de l'armature de carcasse s'étendant du sommet au bourrelet.
- La zone radialement intérieure et en contact avec le gaz de gonflage, cette zone étant généralement constituée par la couche étanche aux gaz de gonflage, parfois appelée gomme intérieure (« inner liner » en anglais).
- La zone interne du pneumatique, c'est-à-dire celle comprise entre les zones extérieure et intérieure. Cette zone inclut des couches ou nappes qui sont appelées ici couches internes du pneumatique. Ce sont par exemple des nappes carcasses, des sous-couches de bande de roulement, des nappes de ceintures de pneumatiques ou tout autre couche qui n'est pas en contact avec l'air ambiant ou le gaz de gonflage du pneumatique.

Comme l'illustrent de nombreux documents parmi lesquels on peut citer les documents EP 1 097 966, EP 1 462 479 B1, EP 1 975 200 A1, EP 1 033 265 B1, EP 1 357 149 A2, EP 1 231 080 A1 et US 4,824,900, les compositions traditionnellement utilisées pour des flancs sont à base de caoutchouc naturel et de caoutchouc synthétique comme le polybutadiène, et de noir de carbone.

Pour les manufacturiers de pneumatiques, la composition d'un flanc de pneumatique doit présenter de nombreuses caractéristiques parfois difficiles à concilier, et notamment une bonne résistance à l'ozone. Une solution connue est d'ajouter dans la composition une cire anti-ozone. Cependant, la cire anti-ozone présente l'inconvénient de migrer vers l'extérieur des flancs, faisant apparaitre des taches blanchâtres qui pénalisent l'esthétique des pneumatiques. Ce phénomène est appelé efflorescence. Il est donc intéressant pour les industriels du pneumatique de disposer de compositions pour flanc présentant les propriétés techniques de résistance à l'ozone, sans que l'efflorescence ne pénalise l'esthétique des flancs de pneumatique. Afin de réduire l'efflorescence, une solution connue consiste à ajouter des polyols, tels que des polypropylène glycols ou des polyéthylène glycols fonctionalisés. Toutefois, de tels additifs tendent à migrer excessivement lors du stockage et de l'usage du pneumatique, de telle sorte que la surface devient collante et grasse au toucher.

Dans ce contexte, une solution apportée par les demanderesses et permettant d'obtenir des pneumatiques qui présentent les propriétés techniques, esthétiques et de toucher discutées ci-dessus, consiste à utiliser de nouvelles compositions de flancs comme explicité ci-après.

L'invention proposée à présent a pour objet un pneumatique pourvu d'un flanc externe, ledit flanc externe comprenant au moins une composition à base d'au moins 15 à 70 pce d'élastomère isoprénique, 25 à 85 pce d'élastomère butadiénique, 10 à 100 pce de noir de carbone, 0,6 à 1,9 pce de polyoxyde d'éthylène de masse moléculaire moyenne en masse Mw comprise dans un domaine allant de 250 à 550 g/mol, 0,5 à 10 pce de cire anti-ozone, et un système de réticulation.

L'invention concerne plus particulièrement les bandages pneumatiques destinés à équiper des véhicules à moteur de type tourisme, SUV ("Sport Utility Vehicles"), ou deux roues (notamment motos), ou avions, ou encore des véhicules industriels choisis parmi camionnettes, « Poids-lourd » - c'est-à-dire métro, bus, engins de transport routier (camions, tracteurs, remorques), véhicules hors-la-route tels qu'engins agricoles ou de génie civil -, et autres véhicules de transport ou de manutention.

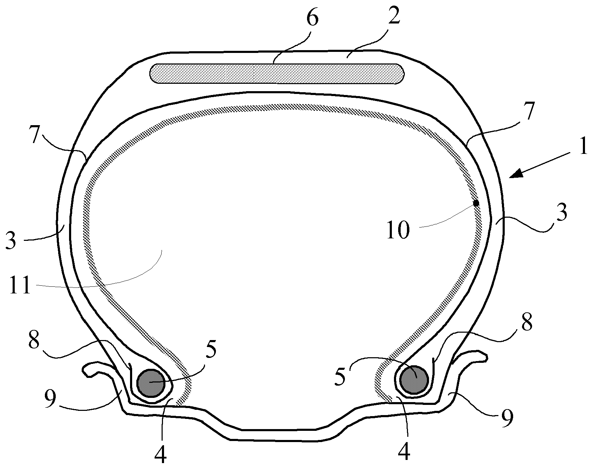

L'invention ainsi que ses avantages seront aisément compris à la lumière de la description et des exemples de réalisation qui suivent, ainsi que de la figure unique relative à ces exemples qui schématise, en coupe radiale, un bandage pneumatique conforme à l'invention.

### I. DESCRIPTION DETAILLEE DE L'INVENTION

Par l'expression «composition à base de» il faut entendre une composition comportant le mélange et/ou le produit de réaction in situ des différents constituants de base utilisés, certains de ces constituants pouvant réagir et/ou étant destinés à réagir entre eux, au moins partiellement, lors des différentes phases de fabrication de la composition, ou lors de la cuisson ultérieure, modifiant la composition telle qu'elle est préparée au départ. Ainsi les compositions telles que mises en œuvre pour l'invention peuvent être différentes à l'état non réticulé et à l'état réticulé.

Par ailleurs, le terme « pce » signifie au sens de la présente demande de brevet, partie en poids pour cent parties d'élastomères, de manière bien connue de l'homme du métier.

Dans la présente description, sauf indication expresse différente, tous les pourcentages (%) indiqués sont des pourcentages en masse. D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Lorsqu'on fait référence à un composé « majoritaire », on entend au sens de la présente invention, que ce composé est majoritaire parmi les composés du même type dans la composition, c'est-à-dire que c'est celui qui représente la plus grande quantité en masse parmi les composés du même type. Ainsi, par exemple, un polymère majoritaire est le polymère représentant la plus grande masse par rapport à la masse totale des polymères dans la composition. De la même manière, une charge dite majoritaire est celle représentant la plus grande masse parmi les charges de la composition. A titre d'exemple, dans un système comprenant un seul polymère, celui-ci est majoritaire au sens de la présente invention ; et dans un système comprenant deux polymères, le polymère majoritaire représente plus de la moitié de la masse des polymères. Au contraire, un composé « minoritaire » est un composé qui ne représente pas la fraction massique la plus grande parmi les composés du même type.

Lorsqu'on fait référence à une unité (ou monomère) « majoritaire » au sein d'un même composé (ou polymère), on entend au sens de la présente invention, que cette unité (ou monomère) est majoritaire parmi les unités (ou monomères) formant le composé (ou polymère), c'est-à-dire que c'est celle qui représente la plus grande fraction, en masse parmi les unités (ou monomères) formant le composé (ou polymère). Ainsi, par exemple, une résine majoritairement composée d'unités issues de monomères en C5 est une résine dans laquelle les unités en C5 représentent la plus grande quantité en masse, parmi toutes les unités composant ladite résine. Dit autrement, un monomère « majoritaire » ou un ensemble de monomères « majoritaires », est un monomère (ou un ensemble de monomères) qui représente la fraction massique la plus grande dans le polymère. Au contraire, un monomère « minoritaire » est un monomère qui ne représente pas la fraction molaire la plus grande dans le polymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

### Composition élastomère de flanc externe

Le pneumatique selon l'invention a pour caractéristique essentielle d'être pourvu d'un flanc externe, ledit flanc externe comprenant au moins une composition à base d'au moins 15 à 70 pce d'élastomère isoprénique, 25 à 85 pce d'élastomère butadiénique, 10 à 100 pce de noir de carbone, 0,6 à 1,9 pce de polyoxyde d'éthylène de masse moléculaire moyenne en masse Mw comprise dans un domaine allant de 250 à 550 g/mol, 0,5 à 10 pce de cire anti-ozone, et un système de réticulation.

### - Elastomères

De façon usuelle, on utilise indifféremment dans le texte les termes « élastomère » et « caoutchouc » qui sont interchangeables.

Par élastomère ou caoutchouc « diénique », doit être compris de manière connue un (on entend un ou plusieurs) élastomère issu au moins en partie (i.e ; un homopolymère ou un copolymère) de monomères diènes (monomères porteurs de deux doubles liaisons carbone-carbone, conjuguées ou non).

Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en mole). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

C'est ainsi que des élastomères diéniques tels que certains caoutchoucs butyl ou les copolymères de diènes et d'alpha-oléfines type EPDM peuvent être qualifiés d'élastomères diéniques "essentiellement saturés" (taux de motifs d'origine diénique faible ou très faible, toujours inférieur à 15%).

Ces définitions étant données, on entend plus particulièrement par élastomère diénique essentiellement insaturé, susceptible d'être utilisé dans les flancs externes conformes à l'invention:
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone.

Pour les besoins de l'invention, la composition du flanc externe comprend de 15 à 70 pce d'élastomère isoprénique, et de 25 à 85 pce d'élastomère butadiénique.

Par élastomère isoprénique, on entend tous les élastomères majoritairement constitué de monomères isoprène. De préférence, l'élastomère isoprénique est choisi dans le groupe constitué par les polymères d'isoprène, les copolymères d'isoprène et leurs mélanges. Parmi les copolymères d'isoprène, on peut citer ceux comprenant à titre de co-monomère, minoritaire, le styrène (SIR), le butadiène (BIR) ou le styrène et le butadiène (SBIR).

Conviennent par exemple tous les copolymères isoprène-styrène et notamment ceux ayant une teneur en styrène comprise entre 5% et 50% en poids et une Tg comprise entre - 25°C et -50°C, conviennent également les copolymères de butadiène-isoprène ayant une teneur en isoprène comprise entre 50% et 90% en poids et une Tg de - 40°C à - 80°C. Dans le cas des copolymères de butadiène-styrène-isoprène conviennent au titre d'élastomère isoprénique ceux ayant une teneur en isoprène supérieure à la teneur en styrène et en butadiène, et notamment ceux ayant une teneur en isoprène comprise entre 50% et 60% en poids.

Plus préférentiellement, l'élastomère isoprénique est choisi dans le groupe constitué par le caoutchouc naturel (NR), les polyisoprènes de synthèse (IR) et leurs mélanges. De manière très préférée, l'élastomère isoprénique est du caoutchouc naturel.

Parmi les polyisoprènes de synthèse, sont utilisés de préférence des polyisoprènes ayant un taux (% molaire) de liaisons cis-1,4 supérieur à 90%, plus préférentiellement encore supérieur à 98%.

De préférence, le taux d'élastomère isoprénique est compris dans un domaine allant de 30 à 60 pce, de préférence de 35 à 50 pce.

Par élastomère butadiénique, on entend tous les élastomères majoritairement constitué de monomères butadiène. De préférence, l'élastomère butadiénique est choisi dans le groupe constitué par les polymères de butadiène, les copolymères de butadiène et leurs mélanges. Parmi les copolymères de butadiène, on peut citer ceux comprenant à titre de co-monomère, minoritaire, le styrène (SBR), l'isoprène (BIR) ou le styrène et l'isoprène (SBIR).

Conviennent tous les polybutadiènes et en particulier ceux ayant une teneur (% molaire) en unités -1,2 comprise entre 4% et 80% ou ceux ayant une teneur (% molaire) en cis-1,4 supérieure à 80%.

Conviennent également tous les copolymères de butadiène-styrène et en particulier ceux ayant une température de transition vitreuse, Tg, (mesurée selon ASTM D3418) comprise entre 0°C et - 70°C et plus particulièrement entre - 10°C et - 60°C, une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%,

Conviennent également les copolymères de butadiène-isoprène ceux ayant une teneur en isoprène comprise entre 5% et 50% en poids et une Tg de - 40°C à - 80°C.

Dans le cas des copolymères de butadiène-styrène-isoprène conviennent au titre d'élastomère butadiénique notamment ceux ayant une teneur en butadiène supérieure à la teneur en styrène et en isoprène.

Plus préférentiellement, l'élastomère butadiénique est choisi dans le groupe constitué par le polybutadiène (BR), les copolymères butadiène-styrène (SBR) et leurs mélanges. De manière très préférée, l'élastomère butadiénique est du polybutadiène.

De préférence, le taux d'élastomère butadiénique est compris dans un domaine allant de 40 à 70 pce, de préférence de 50 à 65 pce.

De manière préférée pour l'invention, les élastomères isopréniques et butadiéniques sont les seuls élastomères de la composition, ce qui siginfie que la somme de leurs taux en pce, est de 100 pce.

Alternativement, à titre complémentaire, la composition du flanc externe du pneumatique de l'invention peut comprendre d'autres élastomères, et ce à un taux préférentiellement inférieur ou égal à 30 pce, de préférence à un taux inférieur ou égal à 25 pce, 20 pce voire 15 pce.

A ce titre, tout élastomère connu de l'homme de l'art et n'étant pas défini ci-dessus comme élastomère isoprénique ou butadiénique est utilisable.

### - Noir de carbone et charges

La composition du flanc externe du pneumatique de l'invention comprend de 10 à 100 pce de noir de carbone.

On peut utiliser tout type noir de carbone connu pour ses capacités à renforcer une composition de caoutchouc utilisable pour la fabrication de pneumatiques.

Comme noirs de carbone conviennent tous les noirs de carbone conventionnellement utilisés dans les pneumatiques (noirs dits de grade pneumatique). Par exemple, on citera plus particulièrement les noirs de carbone renforçants de grade ASTM N115, N134, N234, N326, N330, N339, N347, N375, ou encore, selon les applications visées, les noirs de séries plus élevées (par exemple N550, N660, N683, N772), voire même N990.

Dans le cas d'une utilisation de noirs de carbone avec un élastomère isoprénique, les noirs de carbone pourraient être par exemple déjà incorporés à l'élastomère isoprénique sous la forme d'un masterbatch (voir par exemple demandes WO 97/36724 ou WO 99/16600).

De préférence pour l'invention, on peut utiliser un noir de carbone de haute surface spécifique. On entend ici par surface spécifique la surface spécifique BET mesurée selon la nomre ASTM D6556-09 [methode multipoints (5points)-gaz : azote- domaine de pression relative P/P0 : 0.05 à 0.30].

Ainsi, pour les besoin de l'invention, dans la composition du flanc externe, 10 à 100 pce du noir de carbone, de préférence 10 à 45 pce présente une surface spécifique supérieure à 60m²/g, de préférence supérieure à 80m²/g. Plus préférentiellement, 10 à 100 pce du noir de carbone, de préférence 10 à 45 pce présente une surface spécifique supérieure à 90m²/g, de préférence supérieure à 110m²/g.

De préférence dans la composition du flanc externe du pneumatique de l'invention, la quantité totale de noir de carbone est comprise dans un domaine allant de 20 à 60 pce, de préférence de 25 à 55 pce.

De préférence pour l'invention, le noir de carbone est la seule charge renforçante dans la composition du flanc externe du pneumatique, de préférence la seule charge.

Alternativement et à titre complémentaire, la composition du flanc externe du pneumatique de l'invention peut comprendre une autre charge, éventuellement renforçante, de préférence à un taux total inférieur à 20 pce, plus préférentiellement inférieur à 15 pce.

A ce titre conviennent les charges organiques autres de le noir de carbone, les charges inorganiques renforçantes ou encore les charges non-renforçantes.

Comme exemples de charges organiques autres que des noirs de carbone, on peut citer les charges organiques de polyvinylaromatique fonctionnalisé telles que décrites dans les demandes WO-A-2006/069792 et WO-A-2006/069793.

Comme charges inorganiques renforçantes conviennent notamment des charges minérales du type siliceuse, en particulier de la silice (SiO₂), ou du type alumineuse, en particulier de l'alumine (Al₂O₃). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g. A titres de silices précipitées hautement dispersibles (dites "HDS"), on citera par exemple les silices "Ultrasil" 7000 et "Ultrasil" 7005 de la société Degussa, les silices "Zeosil" 1165MP, 1135MP et 1115MP de la société Rhodia, la silice "Hi-Sil" EZ150G de la société PPG, les silices "Zeopol" 8715, 8745 et 8755 de la Société Huber, les silices à haute surface spécifique telles que décrites dans la demande WO 03/16837.

Pour coupler la charge inorganique renforçante à l'élastomère diénique, on utilise de manière connue un agent de couplage (ou agent de liaison) au moins bifonctionnel destiné à assurer une connexion suffisante, de nature chimique et/ou physique, entre la charge inorganique (surface de ses particules) et l'élastomère diénique, en particulier des organosilanes ou des polyorganosiloxanes bifonctionnels.

Comme charge non-renforçante, on peut citer celles choisies dans le groupe constitué par le carbonate de calcium, le kaolin, la montmorillonite, le silicate d'aluminium, le silicate de magnésium et leurs mélanges.

### - Polyoxyde d'éthylène

La composition du flanc externe du pneumatique de l'invention comprend de 0,6 à 1,9 pce de polyoxyde d'éthylène de masse moléculaire moyenne en masse (Mw) comprise dans un domaine allant de 250 à 550 g/mol.

En effet, les demanderesses ont trouvé qu'une telle quantité d'un tel polyoxyde d'éthylène permettait aux compositions de flanc de pneumatique de présenter un excellent équilibre des performances de résistance à l'ozone, sans dégradation esthétique ni au toucher, de la composition après cuisson. En comparaison, les polyoxydes d'éthylène de masse Mw inférieure à 250 g/mol et de Mw supérieure à 550 g/mol s'avèrent moins efficaces, voire inefficaces.

De manière bien connue de l'homme du métier, les polyoxydes d'éthylène, parfois également appelés poly(oxyde d'éthylène)s, polyéthylène-oxydes (PEO) polyéthylène-glycols (PEG) sont des polymères de type polyéther du glycol de formule générale HO-(CH2-CH2-O)n-H.

Parfois les polyoxydes d'éthylène peuvent être modifiés, par exemple fonctionnalisés ou substitués, par exemple par des radicaux alkyles pour former des dérivés de polyoxyde d'éthylène tels que les alkyl-PEG. Egalement des produits de polymérisation du propylène glycol (PPG) peuvent être copolymérisés pour former des copolymères blocs. Au sens de l'invention, le terme polyoxyde d'éthylène s'entend au sens strict, c'est-à-dire non modifié.

Les polyoxydes d'éthylène sont utilisés dans un grand nombre d'applications telles que la cosmétique ou la pharmacie. Plus rarement ces produits peuvent être utilisés en pneumatique, et encore plus rarement en flanc de pneumatique.

Les polyoxydes d'éthylène, selon la longueur de leurs chaines, peuvent présenter des caractéristiques diverses en terme de température de fusion ou de masse moléculaire.

Les polyoxydes d'éthylène sont disponibles commercialement et sont notés par exemple PEG-1000 ou PEG-600 pour des polyoxyde d'éthylène de masse moléculaire moyenne en masse Mw respectivement de 1000 g/mol ou 600 g/mol.

Pour les besoins de l'invention, la composition doit comprendre un polyoxyde d'éthylène spécifique de masse moléculaire moyenne en masse Mw comprise dans un domaine allant de 250 à 550 g/mol, de préférence de 300 à 500 g/mol et plus préférentiellement de 350 à 450 g/mol, notamment d'environ 400 g/mol comme par exemple le PEG-400.

Préférentiellement pour les besoins de l'invention, la composition comprend 0,7 à 1,8 pce du polyoxyde d'éthylène spécifique, plus préférentiellement de 0,8 à 1,7 pce. Au dessus d'une quantité de 1,9 pce, le polyoxyde d'éthylène exsude à la surface de la composition, pénalisant le toutcher.

### - Cire anti-ozone

La composition du flanc externe du pneumatique de l'invention comprend de 0,5 à 10 pce de cire anti-ozone.

Les cires anti-ozone sont bien connues de l'homme de l'art. Ces cires antiozonantes filmogènes peuvent être par exemple des cires paraffiniques, des cires microcristallines ou des mélanges de cires paraffiniques et micro-cristallines. Elles sont constituées d'un mélange d'alcanes linéaires et d'alcanes non linéaires (iso-alcanes, cyclo-alcanes, alcanes ramifiés) issus du raffinage du pétrole ou de l'hydrogénation catalytique du monoxyde de carbone (Fisher Tropsch Process) comportant majoritairement des chaînes d'au moins 20 atomes de carbone.

Toutes les cires antiozonantes connus de l'homme du métier peuvent être utilisées, y compris les cires naturelles comme par exemple la cire de Candelilla ou la cire de Carnauba. Ces cires peuvent par ailleurs être utilisées en coupages.

On peut citer les cires commerciales « Varazon 4959 » ou « Varazon 6500 » ou encore « Varazon 6810 » de la société Sasol, « Ozoace 0355 » de la société Nippon Seiro, « Negozone 9343 » de la société H&R, « H3841 » de la société Yanggu Huatai.

De préférence, la cire anti-ozone contient de 50 % à 75 % d'alcanes linéaires comportant 30 atomes de carbone à 38 atomes de carbone rapporté à la quantité totale d'alcanes linéaires.

De préférence dans la composition du flanc externe du pneumatique de l'invention, la quantité de cire anti-ozone est comprise dans un domaine allant de 0,7 à 5 pce, plus préférentiellement de 0,7 à 3 pce. Plus préférentiellement, la quantité de cire anti-ozone est comprise dans un domaine allant de 0,9 à 3 pce, de préférence, de 1,2 à 2,8 pce.

### - Système de réticulation

Le système de réticulation peut être un système de vulcanisation, il est préférentiellement à base de soufre (ou donneur de soufre) et d'un accélérateur primaire de vulcanisation. A ce système de vulcanisation viennent optionnellement s'ajouter, divers accélérateurs secondaires ou activateurs de vulcanisation connus (préférentiellement pour 0,5 à 5,0 pce chacun) tels qu'oxyde de zinc, acide stéarique, dérivés guanidiques (en particulier diphénylguanidine), etc. Le soufre ou un donneur de soufre est utilisé à un taux préférentiel compris entre 0,5 et 10 pce, plus préférentiellement compris entre 0,5 et 5,0 pce, par exemple entre 0,5 et 3,0 pce lorsque l'invention est appliquée à un flanc externe de pneumatique. Parmi les donneurs de soufre on peut citer par exemple les alkyl phénol disulfures (APDS) tel que par exemple le disulfure de para-tertiobutylphénol.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de type thiurames, dithiocarbamates de zinc. Ces accélérateurs sont plus préférentiellement choisis dans le groupe constitué par le disulfure de 2-mercaptobenzothiazyle (en abrégé "MBTS"), N-cyclohexyl-2-benzothiazyle sulfénamide (en abrégé "CBS"), N,N-dicyclohexyl-2-benzothiazyle sulfénamide (en abrégé "DCBS"), N-ter-butyl-2-benzothiazyle sulfénamide (en abrégé "TBBS"), N-ter-butyl-2-benzothiazyle sulfénimide (en abrégé "TBSI"), dibenzyldithiocarbamate de zinc (en abrégé "ZBEC") et les mélanges de ces composés. De préférence, on utilise un accélérateur primaire du type sulfénamide.

### - Additifs divers

La composition de flanc externe décrite précédemment peut comporter par ailleurs les divers additifs usuellement présents dans les flancs externes connues de l'homme du métier. On citera par exemple des agents de protection tels que antioxydants ou antiozonants, anti-UV, divers agents de mise en œuvre ou autres stabilisants, ou encore des promoteurs aptes à favoriser l'adhésion au reste de la structure de l'objet pneumatique.

### - Plastifiants - Résine et Huile

### ∘ Résine hydrocarbonée

La composition du flanc externe du pneumatique de l'invention peut en outre comprendre un résine hydrocarbonée, également appelée résine plastifiante.

On rappelle ici que la dénomination "résine" est réservée dans la présente demande, par définition connue de l'homme du métier, à un composé qui est solide à température ambiante (23°C), par opposition à un composé plastifiant liquide tel qu'une huile d'extension ou huile plastifiante. A température ambiante (23°C), ces huiles, plus ou moins visqueuses, sont des liquides (c'est-à-dire, pour rappel, des substances ayant la capacité de prendre à terme la forme de leur contenant), par opposition notamment à des résines ou des caoutchoucs qui sont par nature solides.

Les résines hydrocarbonées sont des polymères bien connus de l'homme du métier, essentiellement à base de carbone et hydrogène, utilisables en particulier comme agents plastifiants dans des matrices polymériques. Elles ont été décrites par exemple dans l'ouvrage intitulé "Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. "Rubber Tires and Mechanical Goods"). Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont par définition miscibles (i.e., compatibles) aux taux utilisés avec les compositions de polymères auxquelles elles sont destinées, de manière à agir comme de véritables agents diluants. Leur Tg est de préférence supérieure à 0°C, notamment supérieure à 20°C (le plus souvent comprise entre 30°C et 120°C).

De manière connue, ces résines hydrocarbonées peuvent être qualifiées aussi de résines thermoplastiques en ce sens qu'elles se ramollissent par chauffage et peuvent ainsi être moulées. Elles peuvent se définir également par un point ou température de ramollissement (en anglais, "softening point"), température à laquelle le produit, par exemple sous forme de poudre, s'agglutine. La température de ramollissement d'une résine hydrocarbonée est généralement supérieure d'environ 50 à 60°C à sa valeur de Tg.

Les résines hydrocarbonées thermoplastiques peuvent être aliphatiques, ou aromatiques ou encore du type aliphatique/ aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole).

A titre de monomères aromatiques conviennent par exemple le styrène, l'alpha-méthylstyrène, l'ortho-, méta-, para-méthylstyrène, le vinyle-toluène, le para-tertiobutylstyrène, les méthoxystyrènes, les chlorostyrènes, le vinylmésitylène, le divinylbenzène, le vinylnaphtalène, tout monomère vinylaromatique issu d'une coupe C9 (ou plus généralement d'une coupe C8 à C10). De préférence, le monomère vinylaromatique est du styrène ou un monomère vinylaromatique issu d'une coupe C9 (ou plus généralement d'une coupe C8 à C10). De préférence, le monomère vinylaromatique est le monomère minoritaire, exprimé en fraction molaire, dans le copolymère considéré.

Selon un mode de réalisation particulièrement préférentiel, la résine plastifiante hydrocarbonée est choisie dans le groupe constitué par les résines d'homopolymères ou copolymères de cyclopentadiène (en abrégé CPD) ou dicyclopentadiène (en abrégé DCPD), les résines d'homopolymères ou copolymères terpène, les résines d'homopolymères ou copolymères terpène phénol, les résines d'homopolymères ou copolymères de coupe C5, les résines d'homopolymères ou copolymères de coupe C9, les résines d'homopolymères et copolymères d'alpha-méthyl-styrène et les mélanges de ces résines. Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. Parmi les résines plastifiantes hydrocarbonées ci-dessus, on citera notamment les résines d'homo- ou copolymères d'alphapinène, betapinène, dipentène ou polylimonène.

De manière très préférentielle, la résine hydrocarbonée utilisée pour l'invention est majoritairement composée d'unités issues de monomères C5. A titre de monomères C5 on entend selon la présente invention et de manière conventionnelle pour l'homme du métier, les monomères issus de coupes pétrolières en C4 à C6. Conviennent par exemple les 1,3 pentadiènes, cis et trans, les pentènes, le cyclopentadiène, de cyclopentène,le pyperylene, l'isoprene etc. Cette résine dite C5, majoritairement composée d'unités issues de monomères C5, peut comprendre, en plus de ces unités, et à titre minoritaire, des unités aliphatiques, ou aromatiques ou encore du type aliphatique/ aromatique c'est-à-dire à base de monomères aliphatiques et/ou aromatiques, autres que C5.

De préférence pour l'invention, le taux de résine hydrocarbonée est compris dans un domaine allant de 1 à 50 pce, préférentiellement de 5 à 30 pce.

De préférence dans la composition du flanc externe du pneumatique de l'invention, la quantité de résine hydrocarbonée est comprise dans un domaine allant de 7 à 25 pce, de préférence de 8 à 20 pce.

De préférence pour l'invention, la composition du flanc externe du pneumatique de l'invention ne comprend pas d'autre résine que la résine C5 décrite ci-dessus.

### ∘ Huile plastifiante

De préférence pour l'invention, la composition du flanc externe du pneumatique de l'invention ne comprend pas d'huile plastifiante ou en comprend moins de 25 pce.

De préférence pour l'invention, la composition du flanc externe du pneumatique de l'invention ne comprend pas d'huile plastifiante.

Alternativement, la composition peut comprendre une huile plastifiante. Dans ce cas, la quantité d'huile plastifiante est préférentiellement comprise dans un domaine allant de plus de 0 à 25 pce, de préférence de 3 à 15 pce.

Toute huile plastifiante, parfois aussi appelée huile d'extension, qu'elle soit de nature aromatique ou non-aromatique connue pour ses propriétés plastifiantes vis-à-vis d'élastomères diéniques, est utilisable. A température ambiante (20°C), ces huiles, plus ou moins visqueuses, sont des liquides (c'est-à-dire, pour rappel, des substances ayant la capacité de prendre à terme la forme de leur contenant), par opposition notamment à des résines plastifiantes hydrocarbonées qui sont par nature solides à température ambiante.

Conviennent particulièrement les huiles plastifiantes choisies dans le groupe constitué par les huiles naphténiques (à basse ou haute viscosité, notamment hydrogénées ou non), les huiles paraffiniques, les huiles MES (Médium Extracted Solvates), les huiles TDAE (Treated Distillate Aromatic Extracts), les huiles minérales, les huiles végétales, les plastifiants éthers, les plastifiants esters, les plastifiants phosphates, les plastifiants sulfonates et les mélanges de ces composés.

Par exemple, on peut citer ceux qui contiennent entre 12 et 30 atomes de carbone, par exemple le trioctyle phosphate. A titre d'exemples de plastifiants esters non aqueux et non hydrosolubles, on peut citer notamment les composés choisis dans le groupe constitué par les trimellitates, les pyromellitates, les phtalates, les 1,2-cyclohexane dicarboxylates, les adipates, les azélaates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en C18, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

### Préparation du flanc externe de l'invention

Afin de préparer le flanc externe selon l'invention, on procède, de manière connue de l'homme de l'art, au mélange des élastomères avec les autres composants du flanc externe à savoir le noir de carbone, la résine C5, la cire, ainsi que le système de réticulation et les éventuels autres ingrédients. L'homme du métier saura adapter l'ordre d'incorporation des ingrédients (en une fois ou en plusieurs étapes successives), la température et le temps de mélangeage.

Ainsi par exemple, on procède pour les essais de la manière suivante : on introduit dans un mélangeur interne, rempli à environ 70% (plus ou moins 5%) et dont la température initiale de cuve est comprise entre 40°C et 80°C, successivement les élastomères, le noir de carbone, la résine C5, la cire ainsi que les éventuels autres ingrédients à l'exception du système de réticulation. On conduit alors un travail thermomécanique (phase non-productive) en une étape, qui dure au total environ 3 à 4 minutes, jusqu'à atteindre une température maximale de « tombée » de 150°C.

On récupère le mélange ainsi obtenu, on le refroidit puis on incorpore le système de réticulation, par exemple du soufre et un accélérateur sur un mélangeur externe (homo-finisseur) à 30°C, en mélangeant le tout (phase productive) pendant un temps approprié (par exemple entre 5 et 12 min).

Selon un autre mode de réalisation, tous les composants y compris le système de réticulation peuvent être introduits successivement dans le mélangeur interne tel que décrit ci-dessus. Dans ce cas le mélange doit se faire jusqu'à une température de « tombée » inférieure ou égale à 130°C, préférentiellement inférieure ou égale à 120°C et notamment inférieure ou égale à 110°C.

Dans certains modes de réalisation alternatifs, un ou plusieurs des élastomères (diénique et/ou thermoplastique) utilisés dans la composition peuvent être introduits sous forme de « masterbatch » ou prémélangés avec certains des composants de la composition.

Les compositions ainsi obtenues sont ensuite calandrées soit sous la forme de plaques (épaisseur de 2 à 3 mm) ou feuilles fines de caoutchouc pour la mesure de leurs propriétés physiques ou mécaniques, soit extrudées sous la forme de flancs externes de pneumatique.

### Utilisation du flanc externe dans un bandage pneumatique

Le flanc externe précédemment décrit est particulièrement bien adapté à une utilisation comme produit fini ou semi-fini, en caoutchouc, tout particulièrement dans un bandage pneumatique pour véhicule automobile tel qu'un véhicule de type deux roues, tourisme ou industriel.

On comprendra aisément que, selon les domaines d'application spécifiques, les dimensions et les pressions enjeu, le mode de mise en œuvre de l'invention peuvent varier, le flanc externe comporte alors plusieurs modes d'utilisation préférentiels.

### II. EXEMPLES DE RÉALISATION DE L'INVENTION

Le flanc externe précédemment décrit est avantageusement utilisable dans les bandages pneumatiques de tous types de véhicules, en particulier véhicules tourisme ou véhicules industriels tels que les poids-lourd.

A titre d'exemple, la figure unique annexée représente de manière très schématique (sans respect d'une échelle spécifique), une coupe radiale d'un bandage pneumatique conforme à l'invention.

Ce bandage pneumatique 1 comporte un sommet 2 renforcé par une armature de sommet ou ceinture 6, deux flancs externes 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La paroi interne du bandage pneumatique 1 comporte une couche 10 étanche à l'air, par exemple d'épaisseur égale à environ 0,9 mm, du côté de la cavité interne 11 du bandage pneumatique 1.

Le bandage pneumatique conforme à l'invention peut utiliser par exemple pour la composition de son flanc externe tel que défini ci-dessus, une composition conforme à la présente invention.

Le pneumatique pourvu de son flanc externe tel que décrit ci-dessus est de préférence réalisé avant réticulation (ou cuisson). La réticulation est ensuite effectuée classiquement.

Une variante de fabrication avantageuse, pour l'homme du métier des bandages pneumatiques, consistera par exemple au cours d'une première étape, à déposer à plat la couche étanche à l'air directement sur un tambour de confection, sous la forme d'une couche ("skim") d'épaisseur adaptée, avant de recouvrir cette dernière avec le reste de la structure du bandage pneumatique, selon des techniques de fabrication bien connues de l'homme du métier.

### - Tests

Les propriétés des compositions élastomères et de certains de leurs constituants sont caractérisées comme indiqué ci-après.

### ∘ Mesure de résistance à l'ozone

La résistance à l'ozone des matériaux est mesurée selon la methode suivante : après cuisson, 10 éprouvettes sont mises sur un trapèze à différentes élongations allant de 10% à 100% par pas de 10% d'élongation. Les éprouvettes dites B15 sont issues d'une plaque MFTR (appelée Monsanto) dont les deux bourrelets situés aux extrémités servent au maintien de l'éprouvette . Les éprouvettes dites B15 ont les dimensions suivantes 78.5mm *15mm*1.5mm. Au bout de 192 heures d'exposition à une température de 38°C et à un taux d'ozone de 50pphm (parties pour cent millions), on note chaque faciès en fonction du nombre et de la profondeur des craquelures. Cette notation subjective va de 0 à 5 (0 : pas de craquelures ; 1 à 4 présence de craquelures de plus en plus importantes et profondes ; 5 rupture de l'éprouvette). La moyenne des notations de toutes les déformations (plus la moyenne est faible, meilleure est la performance ozone) est retenue comme critère de classification.

### ∘ Mesure de la performance Efflorescence

Après une opération de découpage des plaques de mélange cuit, les éprouvettes d'épaisseur 2,5mm sont étuvées à 70°C pendant 12h sous air. Elles sont ensuite étuvées à 40 °C sous air pendant 4 semaines. Après sortie de l'étuve et exposition à température ambiante pendant 15 min, un stimuli mécanique est appliqué de manière à révéler l'efflorescence de la cire. Dans le cas présent, le stimulus mécanique consiste en une opération de grattage de l'éprouvette avec une lame métallique. On évalue ensuite l'ampleur du phénomène d'efflorescence (coloration blanche de la surface) au moyen d'une échelle subjective de valeurs qui est représentative de l'aspect final des échantillons. Les valeurs de cette échelle subjective qui ont été respectivement obtenues pour les échantillons testés peuvent varier de 0 à 3, et correspondent à la « notation efflorescence ». Ces valeurs allant de 0 à 3 correspondent aux aspects suivants pour les échantillons:
0 - Pas d'efflorescence. La surface grattée reste noire
1 - Légère efflorescence.
2 - Efflorescence modérée.
3 - Efflorescence totale. La surface grattée est blanche.

Plus la valeur est faible, plus l'aspect de la performance en efflorescence est bonne, c'est-à-dire l'efflorescence faible.

### ∘ Evaluation de la sensation au toucher

La sensation au toucher est évalué au moyen d'une échelle de valeurs qui est représentative de l'aspect final des échantillons à l'issu du test précédent. Les valeurs de cette échelle qui ont été respectivement obtenues pour les échantillons testés peuvent varier de 0 à 3.

Ces valeurs allant de 0 à 3 correspondent aux aspects suivants pour les échantillons:
0 - La surface est non collante et non grasse
1 - La surface est légèrement grasse
2 - La surface est grasse et collante
3 - La surface est excessivement grasse et collante : l'aspect est rédhibitoire

Plus la valeur est faible, plus la sensation au toucher est bonne.

### - Essais

Des compositions de flanc externe, contenant des élastomères usuels, des charges renforçantes et des additifs correspondant aux témoins (T1 à T10 tableau 1) ont été préparées selon les méthodes connues de l'homme de l'art et similairement à la préparation des compositions de l'invention décrite plus haut. Ces compositions témoins ont été comparées à des compositions (C1 et C2 du tableau 1) conformes à l'invention.

Le tableau 1 présente l'ensemble des compositions préparées. Les taux sont tous exprimés en pce.

**Tableau 1**

| | T1 | C1 | C2 | T2 | T3 | T4 | T5 | T6 | T7 | T8 | T9 | T10 |
|---|---|---|---|---|---|---|---|---|---|---|---|---|
| NR (1) | 50 | 50 | 50 | 50 | 50 | 50 | 50 | 50 | 50 | 50 | 50 | 50 |
| BR (2) | 50 | 50 | 50 | 50 | 50 | 50 | 50 | 50 | 50 | 50 | 50 | 50 |
| Noir de carbone (3) | 50 | 50 | 50 | 50 | 50 | 50 | 50 | 50 | 50 | 50 | 50 | 50 |
| Huile (4) | 20 | 20 | 20 | 20 | 20 | 20 | 20 | 20 | 20 | 20 | 20 | 20 |
| PEG-400 (5) | - | 1,00 | 1,5 | 0,5 | 3,0 | - | - | - | - | - | - | - |
| PEG-200 (6) | - | - | - | - | - | 1,0 | - | - | - | - | - | - |
| PEG-600 (7) | - | - | - | - | - | - | 1,0 | - | - | - | - | - |
| PEG-1000 (8) | - | - | - | - | - | - | - | 1,0 | - | - | - | - |
| PPG-425 (9) | - | - | - | - | - | - | - | | 1,0 | - | - | - |
| Vybar 103 (10) | - | - | - | - | - | - | - | - | - | 3,0 | 5,0 | - |
| Brij C10 (11) | - | - | - | - | - | - | - | - | - | - | - | 1,0 |
| Cire anti-ozone (12) | 2 | 2 | 2 | 2 | 2 | 2 | 2 | 2 | 2 | 2 | 2 | 2 |
| Antioxydant (13) | 3 | 3 | 3 | 3 | 3 | 3 | 3 | 3 | 3 | 3 | 3 | 3 |
| Acide stéarique | 1,1 | 1,1 | 1,1 | 1,1 | 1,1 | 1,1 | 1,1 | 1,1 | 1,1 | 1,1 | 1,1 | 1,1 |
| Oxyde de zinc | 2,5 | 2,5 | 2,5 | 2,5 | 2,5 | 2,5 | 2,5 | 2,5 | 2,5 | 2,5 | 2,5 | 2,5 |
| Accélérateur (14) | 1,4 | 1,4 | 1,4 | 1,4 | 1,4 | 1,4 | 1,4 | 1,4 | 1,4 | 1,4 | 1,4 | 1,4 |
| Soufre | 1,4 | 1,4 | 1,4 | 1,4 | 1,4 | 1,4 | 1,4 | 1,4 | 1,4 | 1,4 | 1,4 | 1,4 |

| | | | | | | | | | | | | |
|---|---|---|---|---|---|---|---|---|---|---|---|---|
| (1) NR caoutchouc naturel (2) Butadiene Rubber Nd (3) Noir de carbone N683 (BET egale à 36m2/g ; COAN 85ml/100g) (4) Huile MES de la société Exxon Mobil (5) PEG-400 « Pluriol FT E 400 » de la société BASF (6) PEG-200, Oxyde de polyéthylène de Mw =200 g/mol, de la société SIGMA-ALDRICH (7) PEG-600 « Pluriol E 600 » de la société BASF (8) PEG-1000 « Pluriol E 1000 LS » de la société BASF (9) PPG-425, Oxyde de polypropylène de Mw 425 g/mol, de la société SIGMA-ALDRICH (10)Polyalphaoléfine « Vybar 103 », de la société Baker Hughes (11)Polyoxyéthylene 10 cetylether « Brij C10 » de la société CRODA (12)Cire antiozone « Varazon 4959 » de la société SASOL (13)6PPD : N-1,3-dimethylbutyl-N'-phenyl-paraphenylènediamine (14)N-cyclohexyl-2-benzothiazyl-sulfenamide « Santocure CBS » de la société Solutia | | | | | | | | | | | | |

Les compositions ont été testées selon les tests décrits précédemment de performance ozone, efflorescence et toucher.

Le tableau 2 présente l'ensemble des résultats des compositions testées.

**Tableau 2**

| | T1 | C1 | C2 | T2 | T3 | T4 | T5 | T6 | T7 | T8 | T9 | T10 |
|---|---|---|---|---|---|---|---|---|---|---|---|---|
| Ozone | 0,0 | 0,0 | 0,0 | 0,1 | 0,1 | 1,0 | 0,0 | 0,6 | 1,0 | nm* | 4,8 | nm* |
| Efflorescence | 3 | 1 | 0 | 3 | 0 | 3 | 2 | 3 | 3 | 2 | 0 | 2 |
| Toucher | 0 | 0 | 1 | 0 | 3 | 0 | 0 | 0 | 0 | 0 | 0 | 0 |

| | | | | | | | | | | | | |
|---|---|---|---|---|---|---|---|---|---|---|---|---|
| * nm : non mesuré | | | | | | | | | | | | |

Les résultats présentés au tableau 2 montrent que seules les compositions C1 et C2, conformes à l'invention permettent d'éviter l'efflorescence et la pénalisation du toucher, tout en présentant une très bonne résistance à l'ozone.

## Revendications

1. Pneumatique pourvu d'un flanc externe, ledit flanc externe comprenant au moins une composition à base d'au moins :
- 15 à 70 pce d'élastomère isoprénique,
- 25 à 85 pce d'élastomère butadiénique,
- 10 à 100 pce de noir de carbone,
- 0,6 à 1,9 pce de polyoxyde d'éthylène de masse moléculaire moyenne en masse Mw comprise dans un domaine allant de 250 à 550 g/mol,
- 0,5 à 10 pce de cire anti-ozone
- un système de réticulation.

2. Pneumatique selon la revendication 1, dans lequel l'élastomère isoprénique est choisi dans le groupe constitué par le caoutchouc naturel, les polyisoprènes de synthèse et leurs mélanges.

3. Pneumatique selon l'une quelconque des revendications précédentes, dans lequel l'élastomère butadiénique est choisi dans le groupe constitué par les polybutadiènes, les copolymères butadiène-styrène et leurs mélanges.

4. Pneumatique selon l'une quelconque des revendications précédentes dans lequel 10 à 100 pce du noir de carbone, de préférence 10 à 45 pce présente une surface spécifique supérieure à 60m²/g, de préférence supérieure à 80m²/g.

5. Pneumatique selon l'une quelconque des revendications précédentes dans lequel 10 à 100 pce du noir de carbone, de préférence 10 à 45 pce présente une surface spécifique supérieure à 90m²/g, de préférence supérieure à 110m²/g.

6. Pneumatique selon l'une quelconque des revendications précédentes dans lequel la quantité totale de noir de carbone est comprise dans un domaine allant de 20 à 60 pce, de préférence de 25 à 55 pce.

7. Pneumatique selon l'une quelconque des revendications précédentes dans lequel le polyoxyde d'éthylène présente une masse moléculaire moyenne en masse Mw comprise dans un domaine allant de 300 à 500 g/mol, de préférence de 350 à 450 g/mol.

8. Pneumatique selon l'une quelconque des revendications précédentes dans lequel la quantité de polyoxyde d'éthylène est comprise dans un domaine allant de 0,7 à 1,8 pce, de préférence de 0,8 à 1,7 pce.

9. Pneumatique selon l'une quelconque des revendications précédentes dans lequel la cire anti-ozone contient de 50 % à 75 % d'alcanes linéaires comportant 30 atomes de carbone à 38 atomes de carbone rapporté à la quantité totale d'alcanes linéaires.

10. Pneumatique selon l'une quelconque des revendications précédentes dans lequel la quantité de cire anti-ozone est comprise dans un domaine allant de 0,7 à 5 pce, plus préférentiellement de 0,7 à 3 pce.

11. Pneumatique selon l'une quelconque des revendications précédentes dans lequel la composition du flanc externe comprend en outre une résine hydrocarbonée.

12. Pneumatique selon l'une quelconque des revendications précédentes dans lequel la composition du flanc externe ne comprend pas d'une huile plastifiante ou en comprend moins de 25 pce.

13. Pneumatique selon l'une quelconque des revendications précédentes dans lequel la composition du flanc externe comprend en outre une huile plastifiante.

14. Pneumatique selon la revendication précédente dans lequel l'huile plastifiante est choisie dans le groupe constitué par les huiles naphténiques, les huiles paraffiniques, les huiles MES, les huiles TDAE, les huiles minérales, les huiles végétales, les plastifiants éthers, les plastifiants esters, les plastifiants phosphates, les plastifiants sulfonates et les mélanges de ces composés.

15. Pneumatique selon l'une quelconque des revendications 13 ou 14 dans lequel la quantité d'huile plastifiante est comprise dans un domaine allant de plus de 0 à 25 pce, de préférence de 3 à 15 pce.

## Patentansprüche

1. Reifen mit einer äußeren Seitenwand, wobei die äußere Seitenwand mindestens eine Zusammensetzung auf Basis von mindestens
- 15 bis 70 phe Isopren-Elastomer,
- 25 bis 85 phe Butadien-Elastomer,
- 10 bis 100 phe Ruß,
- 0,6 bis 1,9 phe Polyethylenoxid mit einer massenmittleren Molmasse Mw in einem Bereich von 250 bis 550 g/mol,
- 0,5 bis 10 phe Antiozonwachs,
- einem Vernetzungssystem
umfasst.

2. Reifen nach Anspruch 1, wobei das Isopren-Elastomer aus der Gruppe bestehend aus Naturkautschuk, synthetischen Polyisoprenen und Mischungen davon ausgewählt ist.

3. Reifen nach einem der vorhergehenden Ansprüche, wobei das Butadien-Elastomer aus der Gruppe bestehend aus Polybutadienen, Butadien-Styrol-Copolymeren und Mischungen davon ausgewählt ist.

4. Reifen nach einem der vorhergehenden Ansprüche, wobei 10 bis 100 phe des Rußes, vorzugsweise 10 bis 45 phe, eine spezifische Oberfläche von mehr als 60 m²/g, vorzugsweise mehr als 80 m²/g, aufweisen.

5. Reifen nach einem der vorhergehenden Ansprüche, wobei 10 bis 100 phe des Rußes, vorzugsweise 10 bis 45 phe, eine spezifische Oberfläche von mehr als 90 m²/g, vorzugsweise mehr als 110 m²/g, aufweisen.

6. Reifen nach einem der vorhergehenden Ansprüche, wobei die Gesamtmenge an Ruß in einem Bereich von 20 bis 60 phe, vorzugsweise von 25 bis 55 phe, liegt.

7. Reifen nach einem der vorhergehenden Ansprüche, wobei das Polyethylenoxid eine massenmittlere Molmasse Mw in einem Bereich von 300 bis 500 g/mol, vorzugsweise von 350 bis 450 g/mol, aufweist.

8. Reifen nach einem der vorhergehenden Ansprüche, wobei die Menge an Polyethylenoxid in einem Bereich von 0,7 bis 1,8 phe, vorzugsweise von 0,8 bis 1,7 phe, liegt.

9. Reifen nach einem der vorhergehenden Ansprüche, wobei das Antiozonwachs 50 bis 75 % lineare Alkane mit 30 Kohlenstoffatomen bis 38 Kohlenstoffatomen, bezogen auf die Gesamtmenge linearer Alkane, enthält.

10. Reifen nach einem der vorhergehenden Ansprüche, wobei die Menge an Antiozonwachs in einem Bereich von 0,7 bis 5 phe, weiter bevorzugt von 0,7 bis 3 phe, liegt.

11. Reifen nach einem der vorhergehenden Ansprüche, wobei die Zusammensetzung der äußeren Seitenwand außerdem ein Kohlenwasserstoffharz umfasst.

12. Reifen nach einem der vorhergehenden Ansprüche, wobei die Zusammensetzung der äußeren Seitenwand kein Weichmacheröl oder weniger als 25 phe Weichmacheröl umfasst.

13. Reifen nach einem der vorhergehenden Ansprüche, wobei die Zusammensetzung der äußeren Seitenwand außerdem ein Weichmacheröl umfasst.

14. Reifen nach dem vorhergehenden Anspruch, wobei das Weichmacheröl aus der Gruppe bestehend aus naphthenischen Ölen, Paraffinölen, MES-Ölen, TDAE-Ölen, Mineralölen, Pflanzenölen, Ether-Weichmachern, Ester-Weichmachern, Phosphat-Weichmachern, Sulfonat-Weichmachern und Mischungen dieser Verbindungen ausgewählt ist.

15. Reifen nach einem der Ansprüche 13 oder 14, wobei die Menge an Weichmacheröl in einem Bereich von mehr als 0 bis 25 phe, vorzugsweise von 3 bis 15 phe, liegt.

## Claims

1. Tire provided with an outer sidewall, said outer sidewall comprising at least one composition based on at least:
- 15 to 70 phr of isoprene elastomer,
- 25 to 85 phr of butadiene elastomer,
- 10 to 100 phr of carbon black,
- 0, 6 to 1,9 phr of polyethylene oxide with an average molecular mass Mw in a range from 250 to 550 g/mol,
- 0, 5 to 10 phr of at least one anti-ozone wax,
- a crosslinking system.

2. Tire according to according to claim 1, wherein the isoprene elastomer is selected from the group consisting of natural rubber, synthetic polyisoprenes and mixtures thereof.

3. Tire according to any one of the preceding claims, wherein the butadiene elastomer is selected from the group consisting of polybutadienes, styrene-butadiene copolymers and mixtures thereof.

4. Tire according to any one of the preceding claims, wherein 10 to 100 phr of carbon black, preferably 10 to 45 phr, has a surface area greater than 60 m² /gm, preferably greater than 80 m² /gm.

5. Tire according to any one of the preceding claims, wherein 10 to 100 phr of carbon black, preferably 10 to 45 phr, has a specific surface area greater than 90 m² /gm, preferably greater than 110 m² /gm.

6. Tire according to any one of the preceding claims, wherein the total amount of carbon black is in a range from 20 to 60 phr, preferably from 25 to 55 phr.

7. Tire according to any one of the preceding claims, wherein the polyethylene oxide has a weight average molecular mass Mw within a range from 300 to 500 µg/mol, preferably 350 to 450 of g/mol.

8. Tire according to any one of the preceding claims wherein the amount of polyethylene oxide is within a range from 0,7 to 1,8 phr, preferably from 0,8 to 1,7 phr.

9. Tire according to any one of the preceding claims wherein the anti-ozone wax contains from 50 % to 75 % linear alkanes having from 30 carbon atoms to 38 carbon atoms relative to the total amount of linear alkanes.

10. Tire according to any one of the preceding claims wherein the amount of the anti-ozone wax is in a range from 0,7 to 5 phr, more preferably from 0,7 to 3 phr.

11. Tire according to any one of the preceding claims, wherein the composition of the outer sidewall further comprises a hydrocarbon resin.

12. Tire according to any one of the preceding claims, wherein the composition of the outer sidewall does not include a plasticizing oil or comprises less than 25 phr thereof.

13. Tire according to any one of the preceding claims wherein the composition further comprises a plasticizing oil.

14. Tire according to the preceding claim, wherein the plasticizing oil is selected from the group consisting of naphthenic oils, paraffinic oils MES, TDAE oils, mineral oils, vegetable oils, ether plasticizers, ester plasticizers, phosphate plasticizers, sulfonate plasticizers and the mixtures of these compounds.

15. Tire according to any one of claims 13 or 14 wherein the amount of the plasticizing oil is within a range from 0 to 25 phr of more, preferably 3 to 15 phr.
